**Europäisches Patentamt**

**European Patent Office**

**Office européen des brevets**

(11) Numéro de publication: **0 147 651**
**B1**

(12) # FASCICULE DE BREVET EUROPEEN

(45) Date de publication du fascicule du brevet:
27.01.88

(51) Int. Cl.⁴: **C 04 B 35/80, C 04 B 35/58**

(21) Numéro de dépôt: **84114410.8**

(22) Date de dépôt: **29.11.84**

(54) Procédé de fabrication d'une structure composite renforcée en matière céramique.

(30) Priorité: **01.12.83 FR 8319208**

(43) Date de publication de la demande:
**10.07.85 Bulletin 85/28**

(45) Mention de la délivrance du brevet:
**27.01.88 Bulletin 88/4**

(84) Etats contractants désignés:
**BE CH DE FR GB IT LI NL SE**

(56) Documents cités:
**EP - A - 0 032 097**
**FR - A - 1 149 539**
**FR - A - 2 084 703**
**FR - A - 2 329 611**
**GB - A - 1 001 867**
**US - A - 4 366 202**

(73) Titulaire: **CERAMIQUES ET COMPOSITES, Les Miroirs - La Défense 3, F-92400 Courbevoie (FR)**

(72) Inventeur: **Minjolle, Louis, 10, rue Jeanne d'Albret, F-65000 Tarbes (FR)**
Inventeur: **Drouet, Claudette, 27, rue des Palombes, F-65290 Juillan (FR)**
Inventeur: **Lengronne, Bernard, Monségur, F-64460 Pontiacq-Viellepinte (FR)**
Inventeur: **Hordonneau, Alain, 67 Villepreux Village, F-33160 Saint-Aubin-de-Médoc (FR)**
Inventeur: **Capdepuy, Bernard, 6, rue des Ormeaux, F-33160 Saint-Médard-en-Jalles (FR)**

(74) Mandataire: **Eggert, Hans-Gunther, Dr., Räderscheidtstrasse 1, D-5000 Köln 41 (DE)**

## Description

La présente invention concerne un procédé de fabrication d'une structure composite de matière céramique renforcée de fibres réfractaires, dans lequel on fait pénétrer les fibres dans une barbotine de la matière céramique, contenant une résine synthétique possédant de bonnes propriétés de mouillage de la matière céramique et des fibres et un solvant de cette résine, on élimine la phase liquide de la barbotine par séchage, on élimine la résine synthétique de la structure formée par une cuisson, puis on soumet la matière céramique chargée des fibres à un frittage.

On peut utiliser comme matière céramique formant la matrice de la structure composite divers matériaux, tels que le nitrure de silicium, le carbure de silicium, l'alumine, la spinelle alumine-magnésie, la zircone, la magnésie ou la mullite, ces matériaux étant incorporés dès le départ à la barbotine dans laquelle on fait pénétrer les fibres.

On connaît par le document FR-A-2 084 703 un procédé de fabrication d'une structure composite de matière céramique renforcée de fibres réfractaires, dans lequel on mélange du silicium en poudre et un matériau réfractaire fibreux à une dispersion d'un polymère dans un liquide, on élimine le dispersant et le polymère, puis on soumet la structure à un frittage nitrurant sous atmosphère d'azote.

Un tel procédé ne permet pas un bon mouillage des fibres, ce qui réduit la cohésion de la structure finale. Il procure des structures difficilement collables sur elles-mêmes et nécessite la vaporisation de quantités importantes d'eau. Il est relativement long et coûteux en énergie.

D'autre part, ce procédé ne concerne que la préparation de pièces à base de nitrure de silicium.

On connaît également par le document GB-A-1 001 867 un procédé de fabrication d'un corps en nitrure d'aluminium, dans lequel on soumet un corps en poudre d'aluminium à une nitruration partielle en présence d'un catalyseur à une température au-dessous de 660°C pour obtenir une stabilisation de la forme du corps avant que ce dernier soit chauffé à une température plus haute compléter la nitruration. Outre le fait qu'il nécessite l'utilisation d'un catalyseur, un tel procédé ne comprend pas d'étape de frittage.

La demande de brevet européen n° 841 058 035 du 22 mai 1984 de la Demanderesse (EP-A-128 409) porte sur un procédé de fabrication d'une structure composite de matière céramique renforcé de fibres réfractaires, dans lequel on prépare une barbotine comprenant une résine synthétique possédant de bonnes propriétés de mouillage de la matière céramique et des fibres, on fait pénétrer les fibres dans la barbotine, on élimine la phase liquide de la barbotine par séchage, on élimine la résine synthétique de la structure formée par une cuisson, et soumet la matière céramique chargée des fibres à un frittage, caractérisé en ce que l'on incorpore dans la barbotine un solvant de la résine synthétique, et en ce que l'on introduit dans la barbotine les fibres assemblées en une nappe ou une mèche, avant d'effectuer le séchage.

Des essais de la Demanderesse ont montré que l'on pouvait également utiliser comme matériau de la matrice le nitrure d'aluminium, qui permet d'obtenir des structures composites d'excellentes propriétés mécaniques. Le nitrure d'aluminium pulvérulent est toutefois un matériau coûteux et difficile à obtenir à une pureté suffisante.

Le présent procédé a pour but de procurer un procédé permettant d'obtenir une structure composite à matrice en nitrure d'aluminium, sans cependant devoir s'approvisionner en ce matériau.

Ce perfectionnement est caractérisé en ce que l'on incorpore initialement à la barbotine, outre le solvant de la résine synthétique, une poudre d'aluminium, et en ce qu'après séchage et cuisson on soumet la structure à une nitruration de la poudre d'aluminium, avant d'effectuer le frittage.

On effectue de préférence la cuisson sous vide avec une montée en température de l'ambiante à 400°C en 40 heures au minimum, en maintenant la perte de poids à 0,5% par heure au maximum.

On effectue de préférence la nitruration de la poudre d'aluminium entre 700° et 800°C. A cette température relativement basse, la plupart des fibres réfractaires, notamment celles de carbure de silicium, ne subissent aucune dégradation.

La nitruration s'effectue avantageusement en portant la structure composite, sous balayage d'azote, de la température ambiante à 400°C à une vitesse de 100°C/heure, puis de 400° à 700°C à une vitesse de 5°C/heure, enfin en maintenant la température à 700°C pendant au moins 3 heures.

Il est décrit ci-après à titre d'exemple un mode opératoire de fabrication de feuilles minces ou de fibres enrobées à matrice en nitrure d'aluminium.

On dissout en jarre une résine telle que du polystyrène ou une résine butyral polyvinylique dans du trichloréthylène. On introduit dans la solution de la poudre d'aluminum micronisé, de la dimension moyenne de particule environ 5 microns ($\mu$m), une cire de paraffine, un agent plastifiant tel que du dibutylphthalate et un agent tensioactif tel que le sulforicinate d'ammonium. On effectue le broyage en jarre pendant 5 heures. On procède alors à la vidange et au tamisage de la barbotine. On soumet celle-ci à un dégazage sous vide avec agitation. On déverse la barbotine à l'entrée d'un tapis roulant, et déroule en même temps à partir d'une bobine des fibres de carbure de silicium ou d'alumine, que l'on immerge dans la barbotine, comme décrit dans les exemples 1 à 3 du brevet principal.

Lorsque l'on veut fabriquer les structures composites à partir de feuilles minces, on coule les fibres enduites de barbotine sur une plaque de verre préalablement recouverte d'une pellicule anti adhérente. On sèche à l'air libre, en terminant éventuellement le séchage sous rayonnement infrarouge. On démoule, découpe les feuilles formées en bandes, que l'on empile et chauffe à 135°-150°C. Il s'effectue un collage des différentes bandes entre elles.

Lorsque la structure composite est plus facile à former à partir de tresses, on introduit dans la barbotine des mèches, que l'on fait passer à la sortie dans un orifice de calibrage. On sèche, enroule en bobine, puis effectue le collage par chauffage à 135-150°C, éventuellement avec pressage.

On soumet alors les structures obtenues à partir des feuilles ou des tresses à une cuisson sous vide, pour éliminer la cire de paraffine et la résine, par montée en température de 20°C à 400°C en 40 heures avec analyse thermogravimétrique, de manière à observer une perte de poids constante ne dépassant pas 0,5% par heure.

On effectue ensuite la nitruration. A cet effet, on dispose les pièces à nitrurer dans un four étanche que l'on met sous vide à la température ambiante. On maintient le vide pendant une heure. Puis l'on remplit d'azote le four et le soumet à un balayage d'azote de 0,4 l/min pendant 30 minutes. Tout en maintenant le balayage d'azote, on porte alors la température de l'ambiante à 400°C à la vitesse de 100°C/heure. On corrige le débit d'azote pour compenser l'azote fixé par les pièces. On porte ensuite à 700°C à la vitesse de 5°C/heure, en 60 heures. On maintient la température de 700°C pendant 3 heures au minimum. On laisse refroidir jusqu'à 100°C, en maintenant le balayage à l'azote.

On effectue enfin le frittage sans charge de la structure composite par traitement thermique à 1800°C au maximum pendant 1 heure.

Parmi les fibres céramiques convenant pour la mise en œuvre du présent perfectionnement, on peut citer, outre celles de carbure de silicium et d'alumine, les fibres courtes de mullite, les fibres de silice pure, celles de nitrure de silicium et de nitrure de bore, ainsi que les trichites.

## Revendications

1. Procédé de fabrication d'une structure composite de matière céramique renforcée de fibres réfractaires, dans lequel on fait pénétrer les fibres dans une barbotine de la matière céramique, contenant une résine synthétique possédant de bonnes propriétés de mouillage de la matière céramique et des fibres et un solvant de cette résine, on élimine la phase liquide de la barbotine par séchage, on élimine la résine synthétique de la structure formée par une cuisson, puis on soumet la matière céramique chargée des fibres à un frittage, caractérisé en ce que l'on incorpore initialement à la barbotine, outre le solvant de la résine synthétique, une poudre d'aluminium, et en ce qu'après séchage et cuisson on soumet la structure à une nitruration de la poudre d'aluminium, avant d'effectuer le frittage.

2. Procédé selon la revendication 1, caractérisé en ce que l'on effectue la cuisson sous vide avec montée en température de l'ambiante à 400°C en 40 heures au minimum, en maintenant la perte de poids à 0,5% par heure au maximum.

3. Procédé selon les revendications 1 ou 2, caractérisé en ce que l'on effectue la nitruration à une température entre environ 700°C et 800°C.

4. Procédé selon la revendication 3, caractérisé em ce que l'on effectue la nitruration en portant la structure composite, sous balayage d'azote, de la température ambiante à 400°C à une vitesse de 100°C/heure, puis de 400°C à 700°C à une vitesse de 5°C/heure, et en ce que l'on maintient la température de 700°C pendant au moins 3 heures.

## Patentansprüche

1. Verfahren zur Herstellung einer Verbundstruktur aus einem durch feuerfeste Fasern verstärkten keramischen Material, bei dem man die Fasern in einen Schlicker des keramischen Materials einbettet, der ein synthetisches Harz mit guten Befeuchtungseigenschaften für das keramische Material und die Fasern enthält und ein Solvens für dieses Harz, wobei man die flüssige Phase des Schlickers durch Trocknen entfernt, das synthetische Harz der gebildeten Struktur durch Brennen entfernt und dann das mit Fasern verstärkte keramische Material sintert, dadurch gekennzeichnet, dass man von Anfang zusätzlich zu dem Solvens für das synthetische Harz ein Aluminiumpulver in den Schlicker einarbeitet, und dass man nach dem Trocknen und Brennen vor der Durchführung des Sinterns die Verbundstruktur einer Nitrierhärtung des Aluminiumpulvers unterzieht.

2. Verfahren nach Anspruch 1, dadurch gekennzeichnet, dass man das Brennen im Vakuum unter Erhöhung der Temperatur von der Umgebungstemperatur bis auf 400°C in wenigstens 40 Stunden durchführt, wobei man den Gewichtsverlust bei einem Maximum von 0,5% pro Stunde hält.

3. Verfahren nach den Ansprüchen 1 und 2, dadurch gekennzeichnet, dass man die Nitrierhärtung bei einer Temperatur zwischen ungefähr 700°C und 800°C durchführt.

4. Verfahren nach Anspruch 3, dadurch gekennzeichnet, dass man die Nitrierhärtung durch Spülen der Verbundstruktur mit Stickstoff und Erhöhung der Temperatur von der Umgebungstemperatur bis auf 400°C mit einer Geschwindigkeit von 100°C pro Stunde und dann von 400°C auf 700°C mit einer Geschwindigkeit von 5°C pro Stunde durchgeführt, und dass man die Temperatur von 700°C während mindestens 3 Stunden aufrecht erhält.

## Claims

1. Method of manufacturing a composite structure of a ceramic material reinforced by refractory fibers whereby the fibers are embedded in a slip of the ceramic material containing a synthetic resin with good ceramic and fiber wetting properties and a solvent of said resin, the liquid phase being thereafter eliminated from the slip by drying, the synthetic resin being driven from the formed structure by firing, whereafter the fiber-filled ceramic material is sintered, characterized in that an aluminium powder is initially incorporated in the slip along with the synthetic resin solvent and the structure is subjected, after suitable drying and firing, to a nitriding of its aluminium powder, prior to sintering.

2. Method according to claim 1, characterized in that firing is carried out in a vacuum with temperature being raised from ambient to 400°C in at least 40 hours, whilst keeping weight losses to a maximum of 0.5% per hour.

3. Method according to claims 1 and 2, characterized in that said nitriding is carried out at a temperature of approximately 700° to 800°C.

4. Method according to claim 3, characterized in that said nitriding is carried out by injecting nitrogen gas and raising the temperature from ambient temperature to 400°C at a rate of 100°C/hour, then from 400°C to 700°C at a rate of 5°C/hour, then keeping the temperature at 700°C for at least three hours.